# EUROPEAN PATENT APPLICATION

(11) **EP 4 660 483 A1**
(43) Date of publication of application: **10.12.2025**
(21) Application number: 24179701.8
(22) Date of filing: 03.06.2024
(51) Int. Cl.: F16J 15/02

(54) **SEALING ELEMENT**

(71) Applicant: Carl Freudenberg KG, 69469 Weinheim (DE)
(72) Inventor: AVRIL, Thomas, 87420 Saint-Victurnien (FR); DI MEO, Hervé, 87310 Sant-Cyr (FR)
(74) Representative: Hoefer & Partner Patentanwälte mbB

(57) **Abstract**

The invention relates to a sealing element (10) for introduction into a cutout, in particular a groove, with a lubricant or without a lubricant, wherein the sealing element (10) has a longitudinal extent direction (12), wherein a sealing cross section (14) of the sealing element (10) is arranged substantially orthogonal to the longitudinal extent direction (12), wherein the sealing cross section (14) has a stabilizing surface (16), wherein the stabilizing surface (16) is configured to retain the sealing element in the cutout and/or to secure the sealing element in the cutout against tilting, wherein the sealing cross section (14) has a retaining surface (18), wherein the retaining surface (18) has at least one securing element (20) which projects from the stabilizing surface (16), wherein the retaining surface (18) is configured to secure the sealing element (10) against sliding out of the cutout by means of the securing element (20).

## Description

The invention relates to a sealing element for introduction into a cutout, in particular a groove, to a tool and to a vehicle or a plant.

There are currently a multiplicity of different solutions for the design of sealing elements. As a result of the increasing number of applications for sealing elements owing to increased requirements in terms of quality and performance, the need for innovative and robust sealing elements is continuously increasing.

The constant increase in efficiency in plant and automotive engineering for reducing consumption and the increasing competition results in cost pressure, and therefore inexpensive plant components that are more efficient and more sustainable are in greater demand.

### Disclosure of the invention

An improved sealing element can advantageously be provided with embodiments of the invention. The invention is defined in the independent claims. Advantageous developments of the invention emerge from the dependent claims and from the description below.

One advantage of the sealing element having the features of Claim 1 is that, with the aid of the securing element on the retaining surface, the sealing element can be easily mounted in a cutout, in particular a groove, and the sealing element in this cutout is securely retained in the cutout with or without lubricant. Another advantage is that, with the aid of the securing element on the retaining surface, the sealing element can be retained in the cutout, in particular independently of an orientation and/or installation position of the cutout or of the housing. Another advantage is that, by means of the securing element on the retaining surface, a higher resistance to sliding out of the cutout can be formed, in order to thus be able to further increase the reliability of the sealing element.

This is achieved according to the invention in that the sealing element for introduction into a cutout, in particular a groove, with a lubricant or without a lubricant, has a longitudinal extent direction, wherein a sealing cross section of the sealing element is arranged substantially orthogonal to the longitudinal extent direction, wherein the sealing cross section has a stabilizing surface, wherein the stabilizing surface is configured to retain the sealing element in the cutout and/or to secure the sealing element in the cutout against tilting, wherein the sealing cross section has a retaining surface, wherein the retaining surface has at least one securing element which projects from the stabilizing surface, wherein the retaining surface is configured to secure the sealing element against sliding out of the cutout by means of the securing element.

In other words, adhesion of the sealing element in a cutout can be improved by means of the securing element on the retaining surface, said securing element projecting beyond the stabilizing surface. At the same time, good mountability of the sealing element in the cutout can be achieved. In this context, "substantially orthogonal" means in particular a deviation of ± 15°. It is thus possible for the stabilizing surface to in particular be used to position, to orient and/or to fix in terms of its position a sealing lip or similar of the sealing element. Preferably, the retaining surface can be used to retain the sealing element in the cutout by means of the securing element. Further preferably, the stabilizing surface can be configured to prevent the sealing element from sliding out of the cutout or to assist an effect of the securing element.

The dependent claims disclose preferred developments of the invention.

Preferably, the sealing element has a first side surface and a second side surface, which each have the retaining surface with the securing element.

An advantage of this embodiment is that arranging the retaining element with the securing element on both sides can further increase the effect for avoiding sliding-out.

Preferably, the sealing element has a transverse extent direction, wherein a tip of the securing element is spaced apart from the stabilizing surface in the transverse extent direction.

The advantage of this embodiment is that the tip of the securing element or a transverse extent length of the securing element can be adapted to individual cutouts, in order to be able to keep a width at the securing surface substantially constant.

Further preferably, a first ratio between a first width of the sealing element at the stabilizing surface and a second width at the retaining surface lies between 0.7 and 0.9.

An advantage of this embodiment is that, in this ratio range of the width, the sealing element has sufficient inherent stability, such that a sealing lip remains substantially orthogonal to the transverse extent direction of the sealing element.

Preferably, a second ratio between a first length of the stabilizing surface and a second length of the retaining surface lies between 2.5 and 3.

An advantage of this embodiment is that, in this ratio range, it was surprisingly determined that the sealing element develops a vibration-damping effect.

Preferably, the retaining surface is arranged closer to a bottom of the cutout than the stabilizing surface when the sealing element is arranged in the cutout.

An advantage of this embodiment is that the orienting effect of the stabilizing surface for the sealing lip or the sealing element is influenced to a lesser extent by the retaining surface with the securing element when the retaining surface is closer to the bottom of the cutout.

Further preferably, the sealing element has, between the stabilizing surface and the retaining surface, an undercut element which is configured to at least partially deflect the securing element in order to simplify insertion of the sealing element into the cutout.

An advantage of this embodiment is that the undercut element makes it possible to omit a little material at the sealing element, in order to thus simplify tilting of the securing element in relation to the sealing element, with the result that insertion of the sealing element is improved.

Preferably, the securing element extends over a total extent length of the sealing element in the longitudinal extent direction.

An advantage of this embodiment is that the producibility of the sealing element is facilitated, in particular by enabling, for example, an extrusion operation.

A further aspect of the invention relates to a tool for the primary forming and/or extrusion of a sealing element, as described above and below, wherein the tool is configured to substantially simultaneously form a stabilizing surface and a retaining surface, wherein the retaining surface has a securing element which projects from the stabilizing surface.

For example, the tool may be used in an extrusion operation and/or a primary forming operation by means of a plastic, rubber and/or elastomer. For example, the sealing element may be produced by means of a plastics injection moulding method. Further preferably, the sealing element may also be continuously extruded and cut to a predetermined length.

A further aspect of the invention relates to a vehicle and/or a plant which has at least one sealing element, as described above and below.

It should also be pointed out that the term "unit" should be understood broadly in the present case and encompasses both a one-part design and a multi-part design of the respective unit, wherein the respective subunits do not have to be provided at a position in the plant, but may also be provided for parts of a plant.

All the disclosures described above and below with respect to one aspect of the invention apply equally to all further aspects of the invention.

Exemplary embodiments of the invention will be described in detail below with reference to the accompanying drawing. In the drawing:
- Figures 1 to 3: show a sealing element according to one embodiment,
- Figure 4: shows a tool according to one embodiment,
- Figure 5: shows a vehicle according to one embodiment.

### Embodiments of the invention

The figures are merely schematic and not true to scale. In the figures, elements that are identical, have the same function and/or are similar can be denoted by the same reference designations.

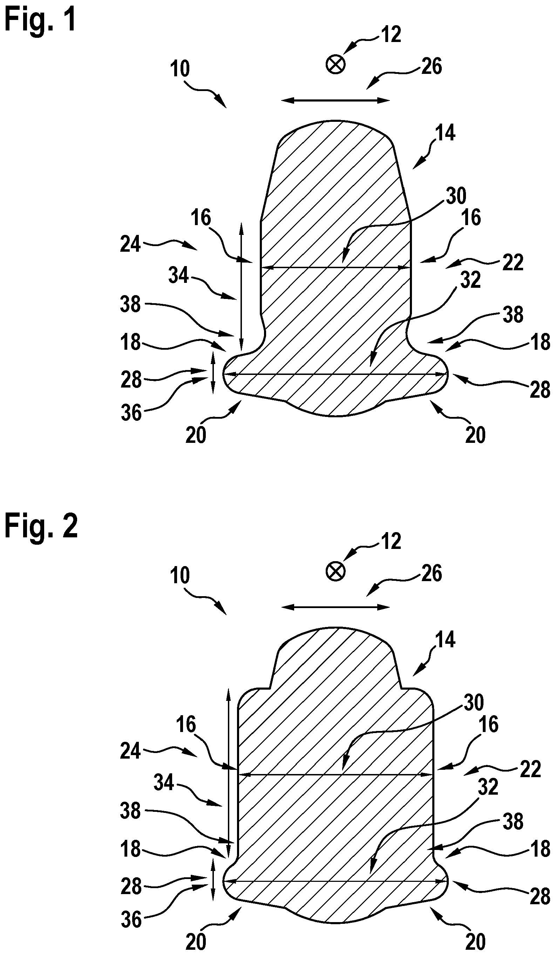

Figure 1 shows a sealing element 10 according to one embodiment. The sealing element 10 for introduction into a cutout has a longitudinal extent direction 12, wherein a sealing cross section 14 of the sealing element 10 is arranged substantially orthogonal to the longitudinal extent direction 12, wherein the sealing cross section 14 has a stabilizing surface 16, wherein the stabilizing surface 16 is configured to secure the sealing element 10 in the cutout against tilting, wherein the sealing cross section 14 has a retaining surface 18, wherein the retaining surface 18 has at least one securing element 20 which projects from the stabilizing surface 16, wherein the retaining surface 18 is configured to secure the sealing element 10 against sliding out of the cutout by means of the securing element 20.

As can be seen in Figure 1, the sealing element 10 has a first side surface 22 with a retaining surface 18 and a securing element 20. Preferably, the sealing element 10 also has a second side surface 24 with a retaining surface 18 and a securing element 20. Further preferably, the sealing element 10 has a transverse extent direction 26 which is oriented in particular orthogonal to the longitudinal extent direction 12. Preferably, a tip 28 of the securing element 20 is spaced apart from the stabilizing surface 16 in the transverse extent direction 26 or the securing element 20 projects away from the stabilizing surface 16, as can be seen in Figure 1.

Preferably, a first ratio between a first width 30, which is defined at the height of the stabilizing surface 16, and a second width 32, which is defined at the height of the retaining surface 18, is between 0.7 and 0.9. Preferably, Figure 1 shows a second ratio between the first length 34 of the stabilizing surface 16 and a second length 36 of the retaining surface 18, said ratio lying in particular between 2.5 and 3.

Further preferably, an undercut element 38 is arranged between the stabilizing surface 16 and the retaining surface 18. The undercut element 38 can be used in particular to improve a deflection of the securing element 20 of the retaining surface 18.

Figure 2 shows a sealing element 10 according to one embodiment. Preferably, the sealing element 10 has a first width 30 at the stabilizing surface 16 and a second width 32 at the retaining surface 18 with the securing element 20. Preferably, there is a first ratio between the first width 30 and the second width 32 of between 0.7 and 0.9. Further preferably, the stabilizing surface 16 has a first length 34 and the retaining surface 18 has a second length 36. Preferably, a ratio between the first length 34 and the second length 36 is between 2.5 and 3. Preferably, the securing element 20 may have rounded corners or similar, in order to thus simplify a mounting operation of the sealing element 10. As illustrated in Figure 2, the sealing element 10 has a first side surface 22 and a second side surface 24, in each of which the retaining surface 18 and the securing element 20 are arranged.

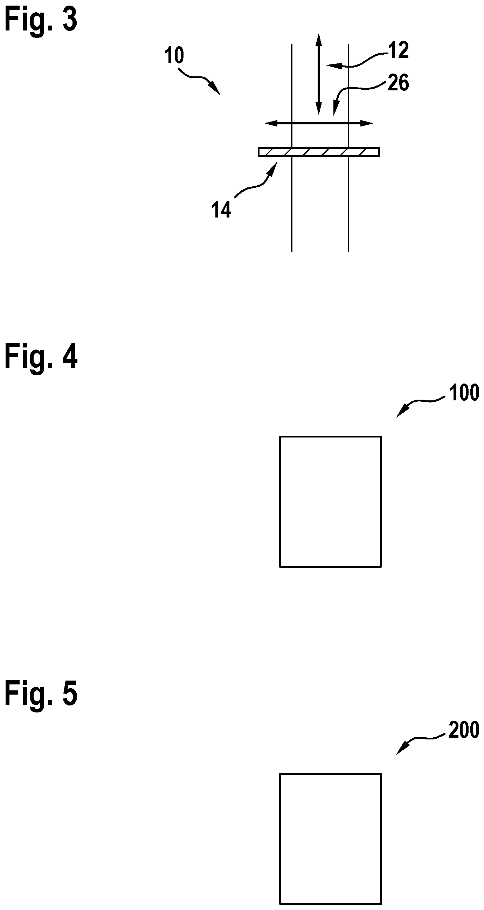

Figure 3 shows a sealing element 10 according to one embodiment. The sealing element 10 is illustrated in a plan view in Figure 3, such that the longitudinal extent direction 12 of the sealing element can be seen. The transverse extent direction 26 is arranged substantially orthogonal to the longitudinal extent direction 12. Further preferably, the sealing cross section 14 may be arranged substantially orthogonal to the longitudinal extent direction 12.

Figure 4 shows a tool 100 according to one embodiment. The tool 100 for the primary forming or extrusion of a sealing element, as described above and below, is configured to substantially simultaneously form a stabilizing surface 16 and a retaining surface 18, wherein the retaining surface 18 has a securing element 20 which projects from the stabilizing surface 16.

Figure 5 shows a vehicle 200 according to one embodiment. The vehicle 200 preferably has a sealing element 10, as described above and below.

### List of reference designations

- 10: Sealing element
- 12: Longitudinal extent direction
- 14: Sealing cross section
- 16: Stabilizing surface
- 18: Retaining surface
- 20: Securing element
- 22: First side surface
- 24: Second side surface
- 26: Transverse extent direction
- 28: Tip
- 30: First width
- 32: Second width
- 34: First length
- 36: Second length
- 38: Undercut element
- 100: Tool
- 200: Vehicle

## Claims

1. Sealing element (10) for introduction into a cutout, in particular a groove, with a lubricant or without a lubricant, wherein the sealing element (10) has a longitudinal extent direction (12), wherein a sealing cross section (14) of the sealing element (10) is arranged substantially orthogonal to the longitudinal extent direction (12), wherein the sealing cross section (14) has a stabilizing surface (16), wherein the stabilizing surface (16) is configured to retain the sealing element in the cutout and/or to secure the sealing element in the cutout against tilting, wherein the sealing cross section (14) has a retaining surface (18), wherein the retaining surface (18) has at least one securing element (20), which projects from the stabilizing surface (16), wherein the retaining surface (18) is configured to secure the sealing element (10) against sliding out of the cutout by means of the securing element (20).

2. Sealing element (10) according to Claim 1, wherein the sealing element (10) has a first side surface (22) and a second side surface (24), which each have the retaining surface (18) with the securing element (20).

3. Sealing element (10) according to either of the preceding claims, wherein the sealing element (10) has a transverse extent direction (26), wherein a tip (28) of the securing element (20) is spaced apart from the stabilizing surface (16) in the transverse extent direction (26).

4. Sealing element (10) according to one of the preceding claims, wherein a first ratio between a first width (30) of the sealing element (10) at the stabilizing surface (16) and a second width (32) at the retaining surface (18) lies between 0.7 and 0.9.

5. Sealing element (10) according to one of the preceding claims, wherein a second ratio between the first length (34) of the stabilizing surface (16) and a second length (36) of the retaining surface (18) lies between 2.5 and 3.

6. Sealing element (10) according to one of the preceding claims, wherein the retaining surface (18) is closer to a bottom of the cutout than the stabilizing surface (16) when the sealing element (10) is arranged in the cutout.

7. Sealing element (10) according to one of the preceding claims, wherein the sealing element (10) has, between the stabilizing surface (16) and the retaining surface (18), an undercut element (38) which is configured to at least partially deflect the securing element (20) in order to simplify insertion of the sealing element (10) into the cutout.

8. Sealing element according to one of the preceding claims, wherein the securing element (20) extends over a total extent length of the sealing element (10) in the longitudinal extent direction (12).

9. Tool (100) for the primary forming and/or extrusion of a sealing element (10) according to one of the preceding claims, wherein the tool (100) is configured to substantially simultaneously form a stabilizing surface (16) and a retaining surface (18), wherein the retaining surface (18) has a securing element (20) which projects from the stabilizing surface (16).

10. Vehicle (200) or a plant which has at least one sealing element (10) according to one of the preceding claims.
